# EUROPEAN PATENT APPLICATION

(11) **EP 4 074 964 A1**
(43) Date of publication of application: **19.10.2022**
(21) Application number: 21168910.4
(22) Date of filing: 16.04.2021
(51) Int. Cl.: F03D 80/80

(54) **METHOD FOR LIFTING A POWER CABLE INSIDE OF A TOWER OF A WIND TURBINE**

(71) Applicant: Siemens Gamesa Renewable Energy A/S, 7330 Brande (DK)
(72) Inventor: Jensen, Morten Christian, 2730 Herlev (DK)
(74) Representative: SGRE-Association

(57) **Abstract**

The invention relates to a method (100) for lifting at least one power cable (3) inside of a tower (20) of a wind turbine (1), whereby the method (100) comprises the step of pushing the at least one power cable (3).

## Description

The invention relates to a method for lifting at least one power cable inside of a tower of a wind turbine, a method for installing at least one power cable in a wind turbine and a lifting arrangement for lifting at least one power cable inside of a tower of a wind turbine.

In wind turbines, power cables, in particular high-voltage cables, are used to transfer power generated by the wind turbine in a generator located in the nacelle of the wind turbine to a bottom section of the tower of the wind turbine. From the bottom section of the tower, the power cables may be connected to the grid. The power generated by the wind turbines may thereby be transmitted to the grid.

For installing the power cables inside of the wind turbines, the power cables must be lifted inside of the tower. This is difficult because the power cables are heavy and the tower is large in terms of its height. A trend in modern wind turbines is that the height of the tower is even further increasing.

It is known to lift the power cables inside of the tower by means of pulling them up from an entrance level at the bottom of the tower to a top section of the wind turbine by means of a crane installed in the top section. For this purpose, the power cable is attached via some form of equipment to the crane, which then lifts the power cable to the top section of the tower of the wind turbine.

So far, the solution of pulling the cable up to the top section of the tower by means of the crane has been practical and efficient as it is possible to lift the power cable to the top section of the tower in a single pull operation carried out by the crane.

However, pulling forces, which the power cables can withstand without being damaged, are limited. These physical limitations of the power cables are exceeded when the power cables are pulled up by the above method and the tower has a very large height. For example, copper inside of common power cables used in wind turbines only allow for a maximum pulling force of 50 N/mm².

Accordingly, to still be able to lift power cables inside of towers of large height, a single pulling operation cannot be performed anymore without exceeding the maximum tensile load of 50 N/mm² of the copper inside of the power cable and thereby possibly damaging the power cable.

One possible solution could be to pull the power cables up to a certain partial height of the tower by means of a first crane, then regrip the power cables from there with a second crane, pull it up further and so on, until the power cables are lifted to the top section of the tower without ever exceeding the allowable maximum tensile load.

However, such lifting operation seems to be very cumbersome and cost-intensive.

It is an object of the invention to provide an improved method for lifting power cables inside of a tower of a wind turbine, which is capable of lifting the power cables without exceeding their physical limitations in a simple and cost-efficient manner.

This object is solved by the subject-matter of the claims. In particular, the object is solved by a method for lifting at least one power cable inside of a tower according to claim 1, a method for installing at least one power cable in a wind turbine according to claim 8 and a lifting arrangement according to claim 11. Further details of the invention unfold from the other claims as well as the description and the drawings. Thereby, the features and details described in connection with the lifting method of the invention, the installation method of the invention and the lifting arrangement of the invention apply in connection with each other so that regarding the disclosure of the individual aspects of the invention it is or can be referred to one another.

According to a first aspect of the invention, the above object is solved by a method for lifting at least one power cable inside of a tower of a wind turbine. The method comprises the step of pushing the at least one power cable.

The pushing of the at least one power cable or multiple power cables allows for conveniently lifting the power cables to the top section of the tower without exceeding the allowed maximum tensile load of the power cables. This is because the weight of the power cable is being supported during pushing, e.g., by a cable pusher, in contrast to not having any support when the power cable hangs freely from a crane such that the entire weight of the power cable is applied as pulling force upon the power cable.

The invention thereby not only allows for using longer cables for towers having a large height but further allows for the use of other than common power cables, in particular very heavy power cables or power cables cleared only for little maximum tensile load. Thereby, further cost-savings regarding the installation of the wind turbine and/or improvements with respect to the transmission of the power generated by the wind turbine are achievable.

The step of pushing or the pushing operation as mentioned herein is generally understood as an operation in which the power cable is pushed by means of at least one device for moving the power cable. In particular, the movement is achieved in a certain predetermined direction such that the power cable moves in that predetermined direction. In particular, the movement is or follows a translational motion.

The lifting by means of pushing may be performed for at least a portion of the height of the tower, e.g., at least 10 meters or at least 20 meters, or substantially for the entire height of the tower, which is measured from the ground to the top section of the tower, in particular a fixation point, to which the power cable may be fixed.

The at least one power cable may be pushed in a substantially vertical direction. The vertical direction is understood as a direction being perpendicular to the horizonal direction or the ground or foundation on which the tower is being installed or supported. In other words, the vertical direction is a direction of (longitudinal or height) extension of the tower of the wind turbine. The substantially vertical direction is a direction which includes the vertical direction and some variations thereof towards opposite angular directions with respect to the horizontal direction or ground or foundation of the tower. In particular, substantially vertical direction is understood such that the direction is oriented in the range of 80° to 100°, more particularly in the range of 85° to 95°, to the horizonal direction or the ground or foundation of the tower.

Generally, the lifting of the at least one power cable may be achieved only by means of pushing the at least one power cable or at least by using a pushing operation but not using any pulling operation by means of which the at least one power cable may be pulled up.

However, the method may further comprise the step of pulling the at least one power cable. By means of pulling the at least one power cable or power cables, the pushing of the power cable may be conveniently assisted. The pulling is particularly beneficial because it is thereby in a convenient manner possible to specify the direction of the lifting towards the top section of the tower. In the combination of pulling and pushing, the pushing may minimize the load on the power cables on the distance between the location of pushing and the fixation point in the top section of the tower.

The pushing and pulling may be performed simultaneously. This means that the pulling and pushing are at least for some or, alternatively, for all of the times of lifting the power cable carried out at the same time.

The pulling may be carried out by means of at least one crane. The at least one crane may be located and/or supported in a top section of the tower or the nacelle, for example. Accordingly, the crane and its operation for pulling the power cable may be conveniently used for supporting the lifting by means of pushing the power cable.

For an offshore wind turbine, the at least one cable may be lifted in the tower and parked. Then, the tower may be shipped offshore and placed on top of a foundation. Then, the nacelle may be placed on top of the tower. Afterwards, the at least one power cable may be connected to the transformer of the wind turbine. A cable pusher may be used for lifting the at least one power cable to the transformer.

The pushing may be carried out by means of at least one cable pusher. Accordingly, with reference to the above definition of pushing, the at least one device may be a cable pusher or several cable pushers. Generally, the cable pusher may have any design capable of pushing the at least one power cable or several power cables consecutively or even in parallel. For example, the cable pusher may comprise one or several gripping units for gripping the power cables. The gripping units may be in the shape of rollers or pulleys. The rollers or pulleys may correspond in shape to the power cables to be pushed such that for different diameters of power cables, different gripping units may have to be used. The shape correspondence may be such that a tight gripping may be achieved. For example, it may be provided that the gripping units are engaging the power cables in a form-fit manner. The gripping units may be actuated or controlled by one or several motors, in particular one or several electrical motors, for example. In case of rollers or pulleys as gripping units, the rollers or pulleys may be rotated around their axis or axle for moving the power cable in the predetermined direction and thereby achieving the pushing operation. In particular, one or several pairs of rollers or pulleys located oppositely of one another may be provided for a cable pusher. The oppositely located rollers or pulleys may be rotated by means of the motor or several motors in the same direction such that they achieve the pushing operation.

The pushing may be carried out by means of multiple cable pushers located at a distance from one another and at different heights of the tower. Accordingly, several cable pushers may be installed at different heights of the tower such that they are separated from one another in the vertical direction or, in other words, along the height of the tower. The cable pushers may be installed or, in other words, fixedly attached at platforms, inner walls or other structure inside of the tower. The distance of the cable pushers from one another may be at least 5 or at least 10 meters, for example. The introduction of several cable pushers removes the physical limitation of a possible tower height.

The method may generally comprise preparation steps before the actual pushing operation is being carried out. For example, such preparation step may be to provide the power cable. The power cable may be provided in the form of a coil or it may be coiled, for example. Also, a preparation step may be to guide the at least one power cable into or through the respective at least one device, in particular the cable pusher, for pushing it. Also, the method may comprise as a preparation step providing or installing the at least one cable pusher inside of the tower.

In case that the at least one power cable is also being pulled, a further preparation step may be to attach a (free) end of the power cable to lifting equipment of the crane. The lifting equipment may comprise at least one rope and a device for securely gripping the end of the at least one power cable for pulling it up, for example. The method may as preparation steps also comprise installing the crane, in particular in the top section of the tower. The crane can assist in installing the at least one cable pusher in the tower, which may be a further preparation step. In particular, the crane may lift the at least one cable pusher for consecutive installation of the at least one cable pusher.

After the lifting has been performed, the method may comprise further steps of deinstalling the at least one installed cable pusher and/or crane. In the case that a crane has been installed, the at least one cable pusher may be lifted with assistance of the crane, for example.

According to a second aspect of the invention, the above object is solved by a method for installing at least one power cable in a wind turbine comprising the method according to the first aspect of the invention and the further steps of fixating the at least one power cable in at least one fixation point of the wind turbine and connecting the at least one power cable to an electrical component of the wind turbine.

At least one of the at least one fixation point may be located in a top section of the tower. This allows for convenient lifting and fixing of the power cables inside of the tower, whereas the electric connection may be facilitated inside of the nacelle, for example.

The at least one power cable may be electrically connected to a transformer of the wind turbine. The transformer in turn may be connected to a converter and generator of the wind turbine such that the power may be transmitted to the grid, a connection point of which may be located at the bottom of the tower, via the power cable. The generator, transformer and converter may be located inside of the nacelle, for example. The at least one power cable may be attached to the grid via a switchgear.

According to a third aspect of the invention, the above object is solved by a lifting arrangement for lifting at least one power cable inside of a tower of a wind turbine, whereby the lifting arrangement comprises at least one cable pusher for pushing the at least one power cable.

The lifting arrangement with its at least one cable pusher is installed or positioned inside of the tower or at least configured for being installed or positioned inside of the tower.

The at least one cable pusher may be configured to push the at least one power cable in a substantially vertical direction. Such configuration of the at least one cable pusher may be achieved by virtue of its design and/or orientation inside of the tower, for example. The vertical direction is understood as a direction being perpendicular to the horizonal direction or ground or foundation of the tower. In other words, the vertical direction is a direction of (longitudinal or height) extension of the tower of the wind turbine. The substantially vertical direction is a direction which includes the vertical direction and some variations thereof towards opposite angular directions with respect to the horizontal direction or ground or foundation of the tower. In particular, the substantially vertical direction is understood such that the direction is oriented in the range of 80° to 100°, more particularly in the range of 85° to 95°, to the horizonal direction or ground or foundation of the tower.

The lifting arrangement may comprise multiple cable pushers located at a distance from one another and attached to the tower at different heights of the tower. Accordingly, the pushing of the at least one power cable may be carried out by means of multiple cable pushers located at a distance from one another and at different heights of the tower. The multiple cable pushers may be installed at different heights of the tower such that they are separated from one another in the vertical direction or direction of longitudinal extension or height of the tower. The cable pushers may be installed or, in other words, fixedly attached at platforms, inner walls or similar structures inside of the tower. The distance of the cable pushers from one another may be at least 5 or at least 10 meters, for example. The introduction of several cable pushers removes the physical limitation of a possible tower height.

The lifting arrangement may further comprise at least one crane for pulling the at least one power cable. By means of pulling the at least one power cable or power cables, the pushing of the power cable may be conveniently assisted. The pulling is particularly beneficial because it is thereby easily possible to specify the direction of the lifting towards the top section of the tower. In the combination of pulling and pushing, the pushing may minimize the load on the power cables on the distance between the location of pushing and a fixation point at the top of the tower. The at least one crane may be located and/or supported in a top section of the tower or the nacelle, for example. Accordingly, the crane and its operation for pulling the power cable may be conveniently used for supporting the lifting by means of pushing the power cable.

The at least one cable pusher and the at least one crane may be configured for simultaneous pushing and pulling of the at least one power cable. The lifting arrangement may for this purpose comprise a controller connected to both, the at least one cable pusher and the at least one crane. The controller may be configured for simultaneously controlling the at least one cable pusher and the at least one crane such that the lifting according to the first aspect of the invention may be carried out. The controller may have a computer and a computer-readable memory. The memory may have saved thereon a computer program. Upon execution of the computer program stored in the memory, it may be provided that the computer carries out the control operation of the controller such that the simultaneous pushing and pulling is carried out by means of the at least one cable pusher and the at least one crane. Alternatively, independent operation of the cable pusher and the crane may be provided for achieving simultaneous pulling and pushing operation. The coordination of the simultaneous pushing and pulling of the at least one cable may be achieved manually, for example.

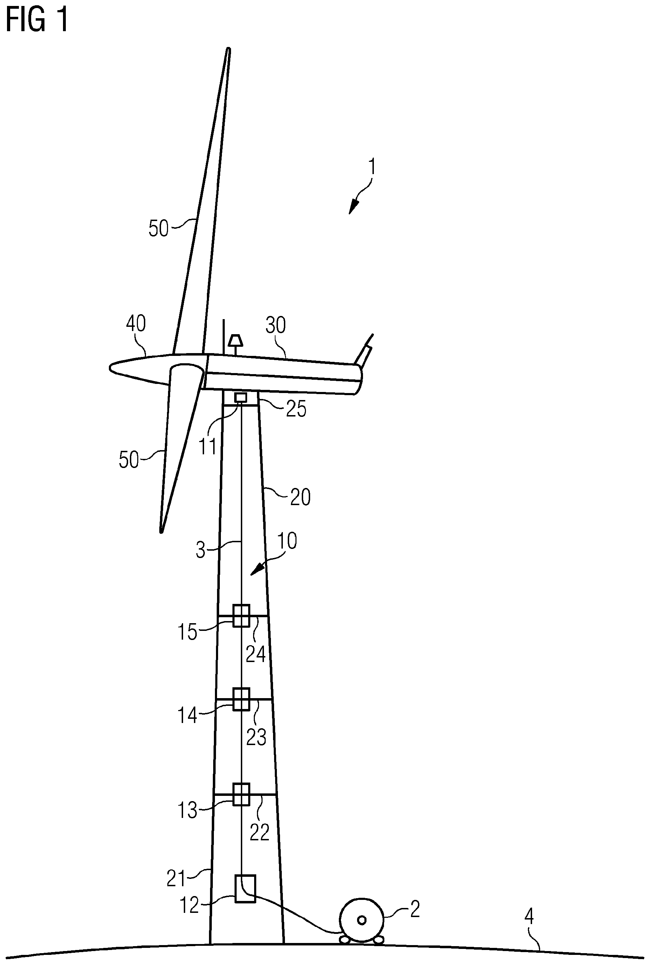

Further advantages, features and details of the invention unfold from the following description, in which by reference to drawings FIGS. 1 - 4 embodiments of the present invention are described in detail. Thereby, the features from the claims as well as the features mentioned in the description can be essential for the invention as taken alone or in an arbitrary combination. In the drawings, there is schematically shown:
- FIG. 1: a schematic illustration of a wind turbine having a lifting arrangement inside of its tower;
- FIG. 2: a schematic illustration of the lifting arrangement of FIG. 1;
- FIG. 3: a schematic illustration of a method for lifting a power cable inside of the tower of the wind turbine by means of the lifting arrangement of FIGS. 1 and 2; and
- FIG. 4: a schematic illustration of a cable pusher of the lifting arrangement of FIGS. 1 and 2.

Same objects in FIGS. 1 - 4 are denominated with the same reference number. The objects are shown in a schematic manner, and their specific dimensions are exemplary and may be enlarged for ease of reference only.

FIG. 1 shows a wind turbine 1 having a tower 20 supported on a ground 4. A nacelle 30 is mounted on top of the tower 20. A hub 40 is connected to a shaft (not shown) inside of the nacelle 30 and has several wind turbine blades 50 attached thereto. In the wind turbine 1, in particular in the nacelle 30, the components necessary for generating power as known in the state of the art, such as generator, transformer, converter, gearbox and/or other components, may be provided. However, different designs of wind turbines 1 are possible and generally the method of the invention is not limited to any specific design of a wind turbine 1.

A lifting arrangement 10 for consecutively lifting power cables 3 inside of the tower 20, when the wind turbine 1 is installed or one or several of the power cables 3 are to be serviced or exchanged, is arranged inside of the tower 20.

The lifting arrangement 10 comprises a crane 11 located in a top section 25 of the tower 20 and several cable pushers 12, 13, 14, 15 installed in the tower 20 at a distance from one another and at different heights of the tower 20. The first cable pusher 11 is located in a bottom section 21, whereas the other cable pushers 13, 14, 15 are located in intermediate sections 22, 23, 24 in between the bottom section 21 and the top section 25. The cable pusher 12 may be supported on the ground inside or outside of the tower 20, whereas the cable pushers 13, 14, 15 may be attached to inner walls of the tower 20 or other structures, such as platforms, inside or outside of the tower 20, for example.

The number of cable pushers 12, 13, 14, 15 as well as the usage of crane 11 are only exemplary and may, for example, depend on the height of the tower 20, in which the power cables 3 are to be lifted. In principle, usage of one cable pusher 12 in combination with the crane 11 or without the crane 11 may be sufficient for lifting the power cable 3.

The power cable 3 as seen in FIG. 1 is unrolled from a coil 2 of the power cable 3 and guided through an entrance level of the tower 20 at a bottom section 21 of the tower 20. From there, the power cable 3 is guided along the multiple cable pushers 12, 13, 14, 15 and at its end is attached by means of a lifting equipment (not shown) to the crane 11.

The power cable 3 is pushed in a vertical direction by means of the cable pushers 12, 13, 14, 15 and pulled in a vertical direction by means of the crane 11, thereby achieving a lifting of the power cable 3 without exceeding its maximum tensile load and thus without damaging the power cable 3.

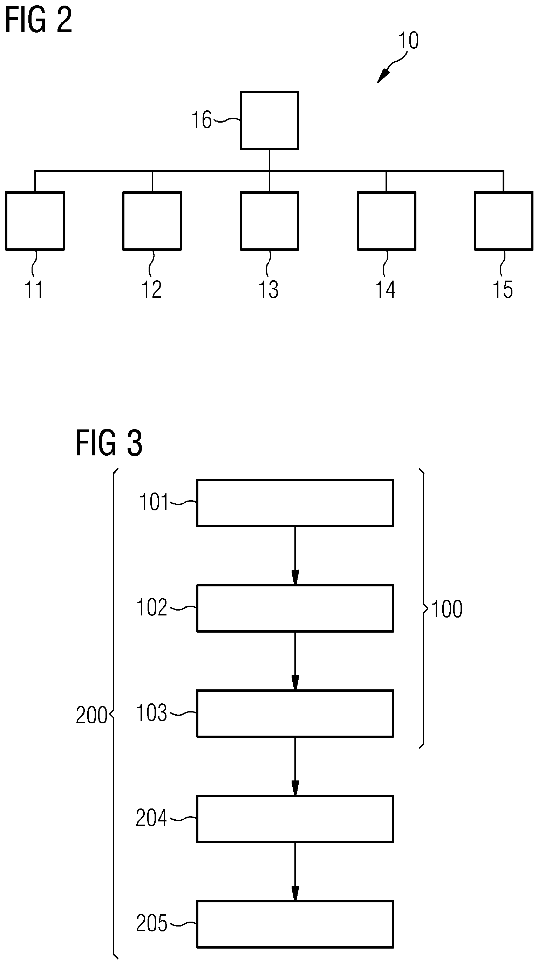

FIG. 2 schematically shows the lifting arrangement 10 having a controller 16 connected to the crane 11 and the cable pushers 12, 13, 14, 15. The controller 16 is configured such that the power cable 3 is simultaneously pushed and pulled for lifting it to the top section 25. The controller 16 may comprise a computer (not shown) and a computer-readable medium (not shown), having stored thereon a computer program for carrying out the step 103 of the method 100 when the computer program is executed by the computer. The method 100 is explained in more detail below with reference to FIG. 3.

FIG. 3 schematically shows a method 200 for installing the power cable 3 in the wind turbine 1. The method 200 includes a method 100 for lifting the power cable 3 inside of the wind turbine 1.

In a first step 101 of method 100, the lifting arrangement 10 is arranged within the tower 20, and the power cable 3 is provided in coiled form as part of the coil 2. The first step 101 includes an arrangement of the crane 11 in the top section 25 of the tower 20, which may be done by means of a further external crane (not shown). The crane 11 may be attached at the top section 25. The arrangement of the cable pushers 12, 13, 14, 15 may be achieved with assistance of the crane 11, lifting the cable pushers 12, 13, 14, 15 to the position at which they are afterwards installed or fixated as described above. Similarly, they may later be deinstalled once the power cables 3 have been lifted with assistance of crane 11.

In a second step 102 following the first step 101, the power cable 3 is guided at least through the first cable pusher 11 and attached to a lifting equipment (not shown) of the crane 11 having a rope and some means for securely gripping an end of the power cable 3, for example. During lifting, the power cable 3 may be guided through the further cable pushers 13, 14, 15 for further pushing it up and lowering the pulling force applied to the power cable 3.

In a third step 103 of method 100, the power cable 3 is simultaneously pulled by the crane 11 and pushed by the cable pushers 12, 13, 14, 15, thereby lifting the power cable 3 to the top section 25.

In step 204 of method 200, which follows step 103 of method 100, the power cable 3 is fixated in a fixation point in the top section 25 of the tower 20.

In step 205, which follows step 204 of method 200, the power cable 3 is electrically connected to the transformer (not shown) of the wind turbine 1.

The steps 102, 103, 204, 205 may be repeated for any further power cable 3 to be lifted and connected to the wind turbine 1.

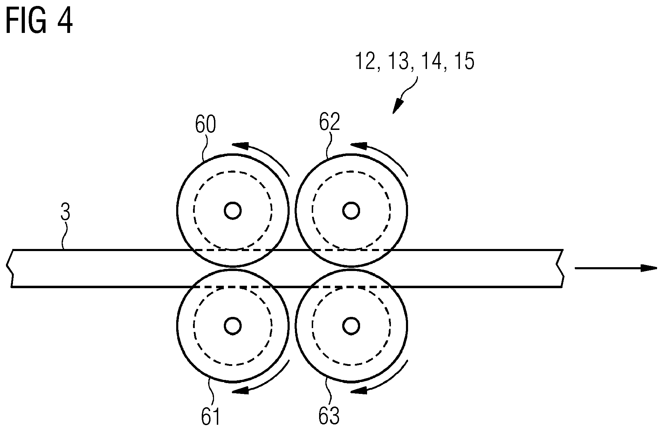

FIG. 4 schematically shows an exemplary cable pusher 12, 13, 14, 15 for use in the lifting arrangement 10.

The exemplary cable pusher 12, 13, 14, 15 comprises two sets of rollers or pulleys 60, 61, 62, 63. Two rollers or pulleys 60, 61, 62, 63 of each set are located opposite of one another.

The power cable 3 is form-fitted in between the rollers or pulleys 60, 61, 62, 63, which are rotated with respect to their axle by means of a motor (not shown) being operated and driving the axles such that the power cable 3 is pushed in the direction indicated by the arrow in FIG. 4.

## Claims

1. Method (100) for lifting at least one power cable (3) inside of a tower (20) of a wind turbine (1), whereby the method (100) comprises the step of pushing the at least one power cable (3).

2. Method (100) according to claim 1, whereby the at least one power cable (3) is pushed in a substantially vertical direction.

3. Method (100) according to any of the previous claims, whereby the method (100) further comprises the step of pulling the at least one power cable (3).

4. Method (100) according to claim 3, whereby the pushing and pulling are performed simultaneously.

5. Method (100) according to claim 3 or 4, whereby the pulling is carried out by means of at least one crane (11).

6. Method (100) according to any of the previous claims, whereby the pushing is carried out by means of at least one cable pusher (12, 13, 14, 15).

7. Method (100) according to claim 6, whereby the pushing is carried out by means of multiple cable pushers (12, 13, 14, 15) located at a distance from one another and at different heights of the tower (20).

8. Method (200) for installing at least one power cable (3) in a wind turbine (1) comprising the method (100) according to any of the previous claims and the further steps of fixating the at least one power cable (3) on at least one fixation point of the wind turbine (1) and connecting the at least one power cable (3) to an electrical component of the wind turbine (1).

9. Method (200) according to claim 8, whereby at least one of the at least one fixation point is located in a top section (25) of the tower (20).

10. Method (200) according to claim 8 or 9, whereby the at least one power cable (3) is electrically connected to a transformer of the wind turbine (1).

11. Lifting arrangement (10) for lifting at least one power cable (3) inside of a tower (20) of a wind turbine (1), whereby the lifting arrangement (10) comprises at least one cable pusher (12, 13, 14, 15) for pushing the at least one power cable (3).

12. Lifting arrangement (10) according to claim 11, whereby the at least one cable pusher (12, 13, 14, 15) is configured to push the at least one power cable (3) in a substantially vertical direction.

13. Lifting arrangement (10) according to claim 11 or 12, whereby the lifting arrangement (10) comprises multiple cable pushers (12, 13, 14, 15) located at a distance from one another and attached to the tower (20) at different heights of the tower (20).

14. Lifting arrangement (10) according to any of claims 11 - 13, whereby the lifting arrangement (10) further comprises at least one crane (11) for pulling the at least one power cable (3).

15. Lifting arrangement (10) according to claim 14, whereby the at least one cable pusher (12, 13, 14, 15) and the at least one crane (11) are configured for simultaneous pushing and pulling of the at least one power cable (3).
